# EUROPÄISCHE PATENTANMELDUNG

(11) **EP 1 211 779 A2**
(43) Veröffentlichungstag der Anmeldung: **05.06.2002**
(21) Anmeldenummer: 01128086.4
(22) Anmeldetag: 27.11.2001
(51) Int. Cl.: H02K 1/32, H02K 9/08

(54) **Rotor einer direkt gasgekühlten elektrischen Turbomaschine**

(30) Priorität: 04.12.2000 DE 10060122
(71) Anmelder: ALSTOM Power N.V., 1101 CS Amsterdam (NL)
(72) Erfinder: Hediger, Daniel, 5504 Othmarsingen (CH); Stefan, Ernö, 5200 Brugg (CH)
(74) Vertreter: Liebe, Rainer

(57) **Zusammenfassung**

Die Kappenplatte (1) besitzt einen axial zurückversetzten Bereich (22) mit einer Schulter (23). Die Gasleitring-Halbschalen (2, 3) weisen jeweils eine radial hervorstehende Rippe (15, 16) auf. Ein aus zwei Halteringhälften (11, 12) bestehender Haltering liegt mit seinem ersten Schenkel (18) in der Schulter (23) an und ist mittels Zylinderschrauben (24) mit der Kappenplatte (1) verbunden. Die Gasleitring-Halbschalen (2, 3) sind gegenüber der Kappenplatte (1) in radialer und axialer Richtung mit Spielräumen (35, 37) positioniert. Zur Bildung von Lücken (17, 36) weisen die Rippen (15, 16) an der Trennstelle (9, 10) der Gasleitring-Halbschalen (2, 3) einen Abstand in Umfangsrichtung auf. Am selben Ort ist dar erste Schenkel (18) der Halteringhälften (11, 12) zur Bildung von mit den Lücken (17, 36) ausgerichteten Ausnehmungen (20, 25) unterbrochen. Im Bereich der Lücken (17, 36) sowie der Ausnehmungen (20, 25) sind Arretierkeile (26) eingesetzt und mit der Kappenplatte (1) verschraubt. Diese Arretierkeile (26) übertragen die Tangentialkräfte von der Gasleitring-Halbschalen (2, 3) auf die Halteringhälften (11, 12).

## Beschreibung

### Technisches Gebiet

Die vorliegende Erfindung betrifft einen Rotor einer direkt gekühlten elektrischen Turbomaschine, welcher Rotor bei beiden axialen Enden jeweils einen mit einer Kappenplatte des Rotors verbundenen, aus zwei Gasleitring-Halbschalen bestehenden Gasleitring aufweist. Sie betrifft auch ein Verfahren zum Zusammenbauen eines solchen Rotors.

### Stand der Technik

Insbesondere bei Rotoren eines Turbogenerators mit direkter Gaskühlung unterliegt bekanntlich die Rotorkappe infolge der Fliehkräfte, die auf sie und die darunter liegenden Wicklungen wirken, einer Ovalisierung. Diese Ovalisierung betrifft auch die Kappenplatte und den Gasleitring. Durch die im Betrieb des Turbogenerators auftretende Druckdifferenz bei den Gasleitring-Halbschalen ergibt sich bei bekannten Turbogeneratoren eine axiale Verschiebung, welche Abrieb erzeugt. Weiter entsteht beim Wellendrehen (Drehzahl von weniger als 40 U/min) bekannter Turbogeneratoren eine tangentiale und radiale Bewegung der Gasleitring-Halbschalen, was zu einem zusätzlichen Abrieb in der Kappenplatte führt.

### Darstellung der Erfindung

Es ist somit ein Ziel der Erfindung, einen Rotor einer direkt gasgekühlten Turbomaschine zu schaffen, bei welchem axiale Verschiebungen der Gasleitring-Halbschalen und auch tangentiale und radiale Bewegungen der Gasleitring-Halbschalen verunmöglicht sind.

Der erfindungsgemässe Rotor zeichnet sich durch Arretierkeile aus, von welchen jeweils einer beim Ort der Trennung, zwischen einander gegenüberliegenden Endbereichabschnitten der Gasleitring-Halbschalen eingesetzt, beidseitig an den Endbereichabschnitten anliegt und mit der Kappenplatte fest verbunden ist. Zudem weist der Rotor einen aus zwei Halteringhälften bestehenden Haltering auf, der mit dem Gasleitring in Verbindung steht und ebenfalls mit der Kappenplatte verbunden ist, um den Gasleitring gegenüber der Kappenplatte axial und radial zu positionieren. Dabei ist die jeweilige Trennstelle der Gasleitring-Halbschalen relativ zur jeweiligen Trennstelle der Halteringhälften um mindestens annähernd 90° versetzt.

Das Verfahren ist dadurch gekennzeichnet, dass die Gasleitring-Halbschalen in die Kappenplatte eingesetzt und gegen dieselben auseinandergepresst werden, danach die Arretierkeile in die Lücken zwischen den einander gegenüberliegenden Endabschnitten der Gasleitring-Halbschalen eingepasst und befestigt werden, die Gasleitring-Halbschalen freigegeben und die Halteringhälften an die Gasleitring-Halbschalen angelegt werden, und schliesslich die Halteringhälften mit der Kappenplatte verschraubt werden.

Vorteilhafte Ausführungen ergeben sich aus den abhängigen Ansprüchen.

Die Vorteile der Erfindung sind insbesondere darin zu sehen, dass die Halteringhälften die Gasleitring-Halbschalen sowohl axial als auch radial positionieren und gleichzeitig auch bei einem Kurzschlussmoment über die Arretierkeile die Tangentialkräfte auffangen. Die Halteringhälften werden in einem zurückversetzten Bereich gegen die Fliehkräfte gehalten. Somit ist gewährleistet, dass sowohl im Stillstand als auch beim Wellendrehen die Gasleitring-Halbschalen in jede Richtung fixiert sind, so dass kein Abrieb entsteht. Jedoch können sich die Gasleitring-Halbschalen im Betrieb der Ovalisierung der Kappenplatte anpassen.

### Kurze Beschreibung der Zeichnungen

Im folgenden wird der Erfindungsgegenstand anhand von einem Ausführungsweg darstellenden Zeichnungen beispielsweise näher erläutert.

Es zeigen:
- Figur 1: eine Frontansicht eines Rotors eines Turbogenerators mit einem Gasleitring und einem Haltering,
- Figur 2: einen Schnitt entlang der Linie II-II der Figur 1;
- Figur 3: einen Schnitt entlang der Linie III-III der Figur 1;
- Figur 4: einen Schnitt entlang der Linie IV-IV der Figur 1;
- Figur 5: einen aus zwei Halteringhälften bestehenden Haltering;
- Figur 6: einen Schnitt entlang der Linie VI-VI der Figur 5;
- Figur 7: in einer schaubildlichen Darstellung einen aus zwei Gasleitring-Halbschalen bestehenden Gasleitring, ohne Haltering;
- Figur 8: einen Schnitt entlang der Linie VIII-VIII der Figur 5;
- Figur 9: einen Schnitt entlang der Linie IX-IX der Figur 5;
- Figur 10: eine Vorderansicht eines Arretierkeiles;
- Figur 11: eine Seitenansicht des Arretierkeiles der Figur 10.

### Wege zur Ausführung der Erfindung

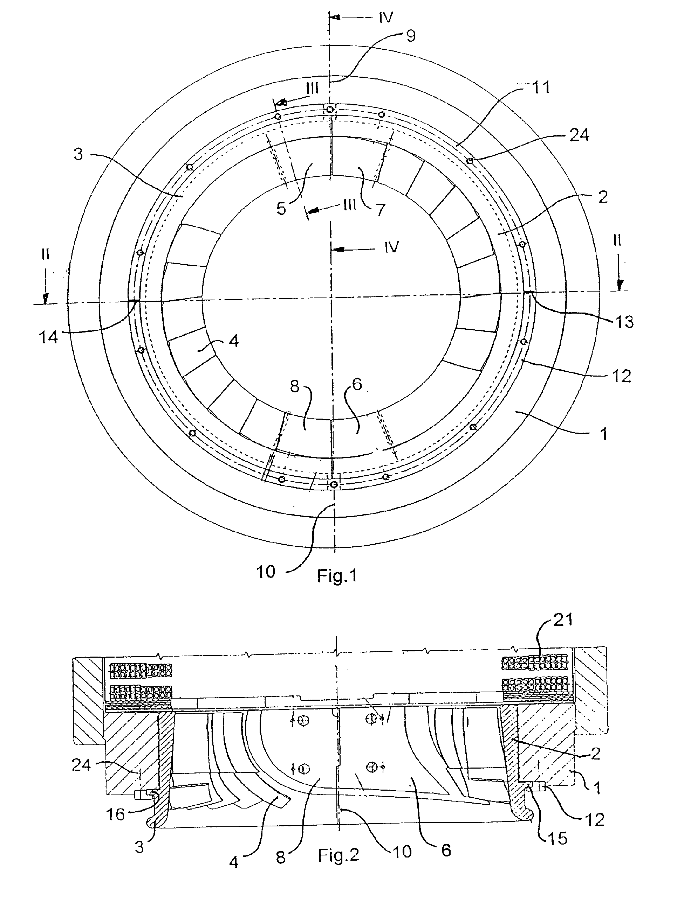

Der gemäss der vorliegenden Erfindung ausgebildete Rotor weist (bei beiden axialen Ebenen) eine Kappenplatte 1 sowie einen aus zwei Halbschalen 2 und 3 bestehenden Gasleitring auf. Die Gasleitring-Halbschalen 2 und 3 enthalten die Gasleitschaufeln 4. Die Bezugsziffern 5, 6, 7 und 8 bezeichnen die an sich bekannten Füllstücke zwischen jeweils benachbarten Gasleitschaufeln 4. Die Bezugsziffern 9 und 10 bezeichnen weiter die Trennstellen zwischen den Gasleitring-Halbschalen 2 und 3. In der Figur 2 sind zudem die Generatorwicklungen 21 eingezeichnet.

In den Figuren 1 und 2 ist weiter ein aus zwei Halteringhälften 11 und 12 bestehender Haltering ersichtlich, auf welchen Haltering weiter unten im einzelnen eingegangen wird. Die Trennstellen dieser Halteringhälften sind mit 13 und 14 angedeutet.

Es ist ersichtlich, dass die Trennstellen 9, 10 der Gasleitring-Halbschalen 2 und 3 gegenüber den jeweiligen Trennstellen 13, 14 der Halteringhälften 11, 12 um 90° versetzt sind.

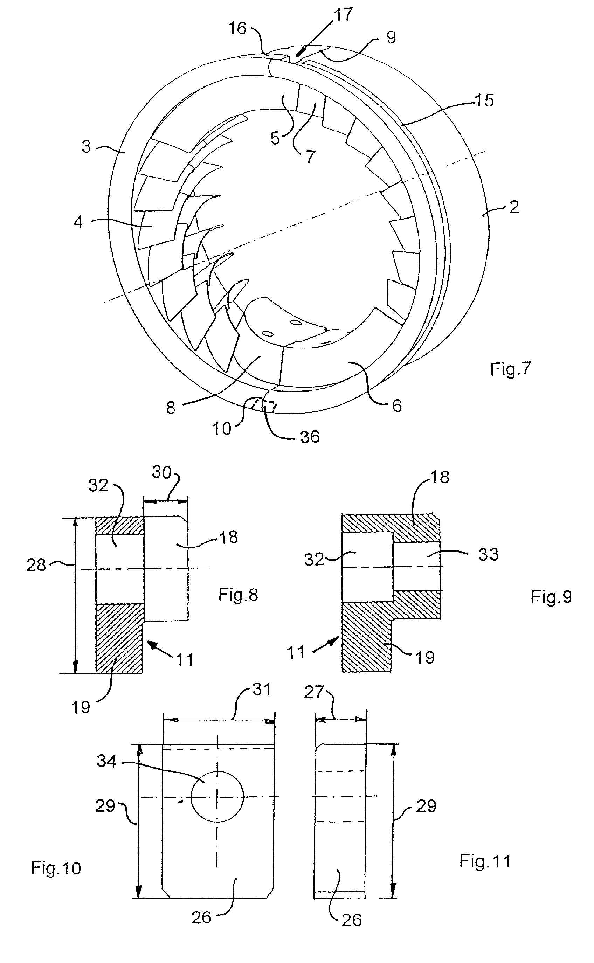

Die Gasleitring-Halbschalen 2, 3 weisen beide eine in radialer Richtung abstehende Rippe 15 bzw. 16 auf. Aus der Fig. 7 ist ersichtlich, dass die Rippen 15, 16 bei einer jeweiligen Trennstelle 9, 10 der Gasleitring-Halbschalen 2, 3 einen gegenseitigen Abstand aufweisen, so dass Lücken 17, 36 vorhanden sind. In der Figur 7 ist lediglich die obere Lücke 17 sichtbar, während die untere Lücke 36 durch die Gasleitring-Halbschalen 2, 3 verdeckt ist.

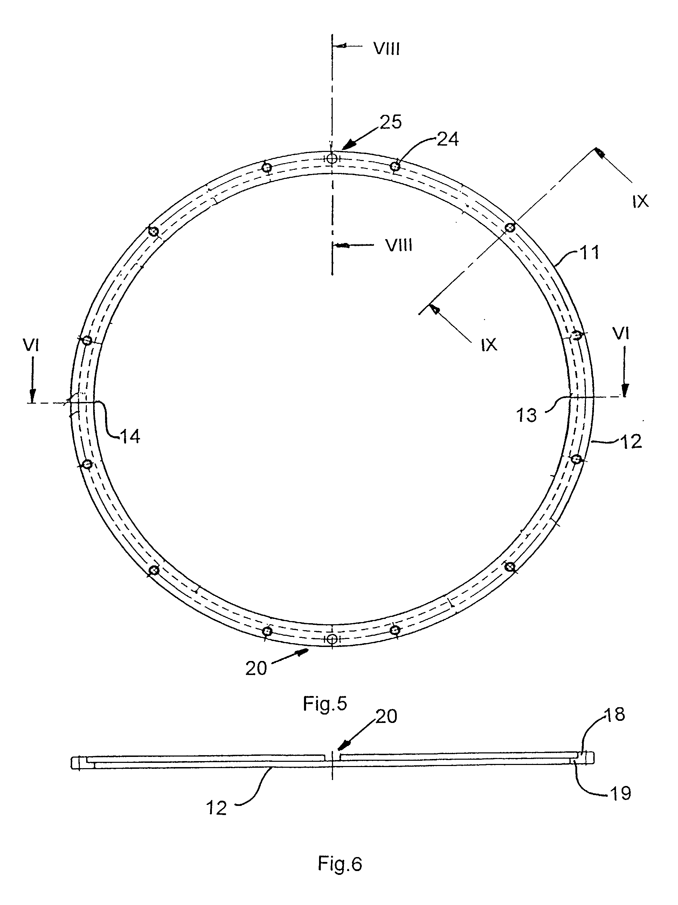

Die Figur 5 zeigt den gesamten, aus den zwei Halteringhälften 11, 12 bestehenden Haltering, während die Figur 6 lediglich die Halteringhälfte 12 darstellt. Mit den Figuren 8 und 9 werden Schnitte durch die Halteringhälfte 11 gezeigt.

Die Halteringhälften 11, 12 weisen eine L-förmige Querschnittsform mit einem ersten und einem zweiten Schenkel 18, 19 auf. Aus der Figur 6 ist ersichtlich, dass der erste Schenkel 18 der Halteringhälften 11, 12 unterbrochen ist, so dass jeweils mittig eine als Nut ausgeformte Ausnehmung gebildet ist. Dabei ist die Ausnehmung der Halteringhälfte 11 mit 25 und die Ausnehmung der Halteringhälfte 12 mit 20 bezeichnet.

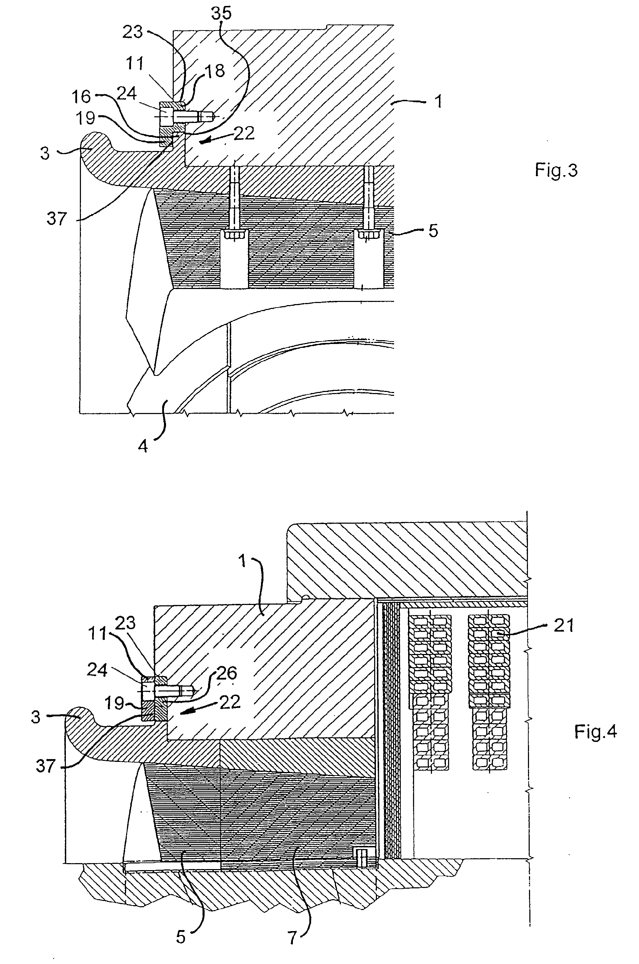

Aus den Figuren 3 und 4 ist ersichtlich, dass die Kappenplatte 1 einen umlaufenden axial zurückversetzten Bereich 22 aufweist, so dass eine Schulter 23 gebildet ist. Die Schulter 23 besitzt einen radialen Abstand von der Rippe 16 der Gasleitring-Halbschale 3. In den somit gebildeten Ringraum ragt der erste Schenkel 18 der Halteringhälften 11, 12 hinein. Dabei ist in den Figuren 3 und 4 lediglich die Halteringhälfte 11 ersichtlich, jedoch weist die Halteringhälfte 12 analoge Einbauverhältnisse auf.

Die Halteringhälften 11, 12 sind über Zylinderschrauben 24 mit der Kappenplatte 1 fest verbunden. Der erste Schenkel 18 der jeweiligen Halteringhälfte 11, 12 liegt seitlich an der Kappenplatte 1 an. Dagegen liegt der zweite Schenkel 19 der L-förmigen Querschnittsform der jeweiligen Halteringhälfte 11, 12 an der von der Kappenplatte 1 entfernten Seite der Rippe 16, d.h. an deren Aussenseite, an. Dabei ist zwischen dem zweiten Schenkel 19 und der Rippe eine axiale Spielpassung 37 ausgebildet. Somit ist ersichtlich, dass die jeweilige Gasleitring-Halbschale 2, 3 gegen eine axiale Verschiebung relativ zur Kappenplatte 1 festgehalten ist.

Weiter liegt der erste Schenkel 18 entlang seines Aussenumfanges an der Schulter 23 der Kappenplatte 1 und entlang seines Innenumfanges an der Rippe 15, 16 an. Zwischen der Rippe 15, 16 und dem ersten Schenkel 18 ist eine radiale Spielpassung 35 ausgebildet. Somit ist die jeweilige Gasleitring-Halbschale 2, 3 auch gegen eine radiale Bewegung gegenüber der Kappenplatte 1 und die jeweilige Halteringhälfte 11, 12 gegen eine radiale Bewegung in der Kappenplatte 1 gesichert.

Wie bereits erwähnt worden ist, weisen die Halteringhälften 11, 12 Ausnehmungen 25, 20 auf, die insbesondere aus den Figuren 5 und 6 ersichtlich sind. Diese Halteringhälften 11, 12 sind zwischen den Gasleitring-Halbschalen 2, 3 und der Kappenplatte 1 angeordnet, so wie insbesondere aus der Figur 2 ersichtlich ist. Die Orientierung der Halteringhälften 11, 12 und der Gasleitring-Halbschalen 2, 3 entspricht dabei der Orientierung der zeichnerischen Darstellungen der Fig. 6 und 7. Daraus geht hervor, dass die Ausnehmungen 25, 20 in den Halteringhälften 11, 12 mit den Lücken 17, 36 zwischen den Rippen 15, 16 der Gasleitring-Halbschalen 2, 3 zusammenfallen.

In die Lücken 17, 36 und die Ausnehmungen 25, 20 sind Arretierkeile 26 eingepasst. Die Dimension der Höhe 29 der Arretierkeile 26 entspricht der Dimension der Höhe 28 des zweiten Schenkels 19 der L-förmigen Halteringhälften 11, 12. Die Dimension der Tiefe 27 der Arretierkeile 26 entspricht der Dimension der Tiefe 30 des ersten Schenkels 18 der Halteringhälften 11, 12. Schliesslich entspricht die Dimension der Breite 31 der Arretierkeile 26 der Weite der Lücken 17, 36 bzw. der Ausnehmungen 25, 20.

Wie bereits in den Figuren 3 und 4 dargestellt, sind die Halteringhälften 11, 12 über Zylinderschrauben 24 mit der Kappenplatte 1 verschraubt, wobei der Kopf einer jeweiligen Zylinderschraube 24 in der jeweiligen Bohrung 32 der Halteringhälften 11, 12 mit dem grösseren Durchmesser sitzt und der Schaft durch die Bohrung 33 mit dem kleineren Durchmesser verläuft (Fig. 9).

Im Bereich der Ausnehmungen 25, 20 sitzt der Kopf einer jeweiligen Zylinderschraube ebenfalls in der jeweiligen Bohrung 32 mit dem grösseren Durchmesser (Fig. 8). Jedoch verläuft der mit der Kappenplatte 1 verschraubte Schaft der Zylinderschraube durch die Bohrung 34 der Arretierkeile 26 (Fig. 10, 11). Der Kopf der festgezogenen Zylinderschraube 24 liegt somit unmittelbar am Arretierkeil 26 an (Fig. 4).

Beim Zusammenbauen des Rotors werden vorerst die Gasleitring-Halbschalen 2, 3 in die Kappenplatten 1 eingesetzt. Danach werden die Gasleitring-Halbschalen 2, 3 in den Trennstellen 9, 10 und bei den jeweiligen Lücken 17, 36 auseinandergepresst, die beiden Arretierkeile 26 eingepasst und mittels einer nicht dargestellten Zylinderschraube an der Kappenplatte 1 befestigt. Darüber werden schliesslich die Halteringhälften 11, 12 mit der Kappenplatte 1 verbunden.

Es ist somit ersichtlich, dass die Halteringhälften 11, 12 die Gasleitring-Halbschalen 2, 3 axial und radial positionieren. Gleichzeitig werden bei einem Kurzschlussmoment über die Arretierkeile 26 die Tangentialkräfte aufgefangen. Die Halteringhälften 11, 12 sind ihrerseits im beschriebenen Ringraum in der Kappenplatte 1 gegen die Fliehkräfte gehalten. Alle Teile sind mit den notwendigen Toleranzen für ein spannungsfreies Halten der Gasleitring-Halbschalen 2, 3 ausgelegt und zusätzlich mit Gleitmittel behandelt. Somit ist gewährleistet, dass sowohl im Stillstand als auch beim Wellendrehen die Gasleitring-Halbschalen in jeder Richtung fixiert sind, so dass kein Abrieb stattfinden kann. In Betrieb jedoch können sich die Gasleitring-Halbschalen 2, 3 der Ovalisierung der beiden Kappenplatten 1 bei beiden Rotorenden anpassen.

### Bezugszeichenliste

- 1: Kappenplatte
- 2: Gasleitring-Halbschale
- 3: Gasleitring-Halbschale
- 4: Gasleitschaufel
- 5: Füllstück
- 6: Füllstück
- 7: Füllstück
- 8: Füllstück
- 9: Trennstelle, zwischen 2 und 3
- 10: Trennstelle, zwischen 2 und 3
- 11: Halteringhälfte
- 12: Halteringhälfte
- 13: Trennstelle, zwischen 11 und 12
- 14: Trennstelle, zwischen 11 und 12
- 15: Rippe
- 16: Rippe
- 17: Lücke zwischen 15 und 16
- 18: Erster Schenkel von 11, 12
- 19: Zweiter Schenkel von 11, 12
- 20: Ausnehmung von 11 und 12
- 21: Generatorwicklungen
- 22: axial zurückversetzter Bereich in der Kappenplatte
- 23: Schulter in der Kappenplatte
- 24: Zylinderschraube
- 25: Ausnehmung von 11, 12
- 26: Arretierkeile
- 27: Tiefe von 26
- 28: Höhe von 19
- 29: Höhe von 26
- 30: Tiefe von 18
- 31: Breite von 26
- 32: Bohrung (Kopfteil)
- 33: Bohrung (Schaftteil)
- 34: Bohrung (Schaftteil)
- 35: Spielraum radial
- 36: Lücke zwischen 15 und 16
- 37: Spielraum axial

## Patentansprüche

1. Rotor einer direkt gasgekühlten elektrischen Turbomaschine, welcher Rotor bei beiden axialen Enden jeweils einen mit einer Kappenplatte (1) des Rotors verbundenen, aus zwei Gasleitring-Halbschalen (2, 3) mit Trennstellen (9, 10) bestehenden Gasleitring aufweist, **gekennzeichnet durch**
a) einen aus zwei Halteringhälften (11, 12) mit Trennstellen (13, 14) bestehenden Haltering, der mit den Gasleitring-Halbschalen (2, 3) in Verbindung steht und mit der Kappenplatte (1) fest verbunden ist, um den Gasleitring gegenüber der Kappenplatte (1) axial und radial zu positionieren, wobei die jeweilige Trennstelle (9, 10) der Gasleitring-Halbschalen (2, 3) relativ zur jeweiligen Trennstelle (13, 14) der Halteringhälften (11, 12) um mindestens annähernd 90° versetzt ist,
b) von den jeweiligen Gasleitring-Halbschalen (2, 3) jeweils in radialer Richtung abstehende Rippen (15, 16), die an der Kappenplatte (1) seitlich anliegen, und
c) Arretierkeile (26), von welchen jeweils einer an den Trennstellen (9, 10) der Gasleitring-Halbschalen (2, 3) in Lücken (17, 36) zwischen den Rippen (15, 16) eingesetzt, beidseitig in Ausnehmungen (20, 25) der Halteringhälften (11, 12) anliegt und mit der Kappenplatte (1) fest verbunden ist.

2. Rotor nach Anspruch 1, **dadurch gekennzeichnet, dass** die Kappenplatte (1) zur Bildung einer Schulter (23) einen axial zurückversetzten Bereich (22) aufweist, welche Schulter (23) in einem radialen Abstand von der jeweiligen Rippe (15, 16) angeordnet ist, so dass zwischen der Schulter (23) und den Rippen (15, 16) ein Ringraum vorhanden ist, in welchem ein erster Schenkel (18) der mit der Kappenplatte (1) verbundenen Halteringhälften (11, 12) angeordnet ist, welche ersten Schenkel (18) entlang ihres Aussenumfanges an der Schulter (23) der Kappenplatte (1) und seitlich an der Kappenplatte (1) anliegen sowie entlang ihres Innenumfanges einen Spielraum (35) zur Rippe (15, 16) aufweisen.

3. Rotor nach Anspruch 2, **dadurch gekennzeichnet, dass** jede Halteringhälfte (11, 12) eine L-förmige Querschnittsform aufweist, wobei ein zweiter Schenkel (19) der L-förmigen Halteringhälfte (11, 12) ausgebildet ist und einen Spielraum (37) zur von der Kappenplatte (1) abgewandten Seite der jeweiligen Rippe (15, 16) aufweist.

4. Rotor nach einem der Ansprüche 1 bis 3, **dadurch gekennzeichnet, dass** die Rippen (15, 16) der Gasleitring-Halbschalen (2, 3) an der Trennstelle (9, 10) einen gegenseitigen Abstand aufweisen um eine Lücke (17, 36) zu bilden, und der erste Schenkel (18) eine mit der Lücke (17, 36) zusammenfallende Ausnehmung (20, 25) aufweist, und dass ein jeweiliger Arretierkeil (26) bei den Lücken (17, 36) und den Ausnehmungen (20, 25) eingesetzt ist.

5. Rotor nach Anspruch 4, **dadurch gekennzeichnet, dass** die Dimension der Höhe (29) jedes Arretierkeiles (26) gleich der Dimension der Höhe (28) des zweiten Schenkels (19) der jeweiligen Halteringhälfte (11, 12) entspricht, die Dimension der Tiefe (27) jedes Arretierkeiles (26) gleich der Dimension der Tiefe (30) des ersten Schenkels (18) entspricht und die Dimension der Breite (31) jedes Arretierkeiles (26) der Weite der Lücken (17, 36) bzw. der Ausnehmungen (20, 25) entspricht.

6. Rotor nach Anspruch 5, **dadurch gekennzeichnet, dass** die Halteringhälften (11, 12) und Arretierkeile (26) mittels einen Kopf und einen Schenkel aufweisenden Zylinderschrauben (24) mit der Kappenplatte (1) verbunden sind, wobei der Kopf der Zylinderschrauben (24) im zweiten Schenkel (19) der jeweiligen Halteringhälften (11, 12) versenkt angeordnet ist und der Schaft durch den ersten Schenkel (18) bzw. den Arretierkeil (26) verläuft, derart, dass sich der Kopf der in der Kappenplatte (1) eingeschraubten Zylinderschraube (24) am ersten Schenkel (18) bzw. am jeweiligen Arretierkeil (26) abstützt.

7. Verfahren zum Zusammenbauen des Rotors nach Anspruch 1, **dadurch gekennzeichnet, dass** die Gasleitring-Halbschalen (2, 3) in die Kappenplatten (1) eingesetzt und gegen dieselben auseinandergepresst werden, danach die Arretierkeile (26) in die Lücken (17, 36) zwischen den Trennstellen (9, 10) der Gasleitring-Halbschalen (2, 3) eingepasst und befestigt werden, die Gasleitring-Halbschalen (2, 3) freigegeben und die Halteringhälften (11, 12) an die Gasleitring-Halbschalen (2, 3) mit Spielräumen (35, 37) angelegt werden, und schliesslich die Halteringhälften (11, 12) mit der Kappenplatte (1) verschraubt werden.
